# EUROPEAN PATENT APPLICATION

(11) **EP 3 514 444 A1**
(43) Date of publication of application: **24.07.2019**
(21) Application number: 17850811.5
(22) Date of filing: 08.09.2017
(51) Int. Cl.: F21S 41/00

(54) **SENSOR SYSTEM**

(30) Priority: 15.09.2016 JP 2016180577
(71) Applicant: Koito Manufacturing Co., Ltd., Tokyo 108-8711 (JP)
(72) Inventor: KASABA, Yusuke, Shizuoka-shi Shizuoka 424-8764 (JP); HORI, Takashi, Shizuoka-shi Shizuoka 424-8764 (JP); YAMAMOTO, Teruaki, Shizuoka-shi Shizuoka 424-8764 (JP)
(74) Representative: Grünecker Patent- und Rechtsanwälte PartG mbB
(86) International application number: PCT/JP2017/032436
(87) International publication number: WO 2018/051909

(57) **Abstract**

A translucent cover (12) defines, together with a housing (11), an accommodating space (13) and forms a portion of the outside surface of a vehicle. A camera (14), a front LiDAR sensor (15), and a right LiDAR sensor (16) detect information about the outside of the vehicle. A millimeter wave radar (17) detects information about the outside of the vehicle without using light, by a method different from those employed by the camera (14), the front LiDAR sensor (15), and the right LiDAR sensor (16). The camera (14), the front LiDAR sensor (15), and the right LiDAR sensor (16) are accommodated in the accommodating space (13). The millimeter wave radar (17) is supported on the outside surface of the housing 11.

## Description

### Technical Field

The presently disclosed subject matter relates to a sensor system adapted to be mounted on a vehicle.

### Background Art

In order to realize a self-driving technique of a vehicle, sensors for obtaining external information of the vehicle shall be mounted on a vehicle body. Different types of sensors may be used to more accurately obtain the external information. As such sensors, a camera and a LiDAR (Light Detection and Ranging) sensor can be exemplified (see Patent Document 1, for example).

### Prior Art Document

### Patent Document

Patent Document 1: Japanese Patent Publication No. 2010-185769A

### Summary

### Technical Problem

With the advancement of driving support technology, it is demanded to obtain more diverse information from the outside of the vehicle. In order to meet this demand, the type of sensor for obtaining information of the outside of the vehicle may be increased. However, as the number of types of sensors increases, it is inevitable to increase the size of the structure.

Therefore, it is demanded to obtain more diverse external information of the vehicle while suppressing enlargement of the structure.

### Solution to Problem

In order to meet the demand described above, an illustrative aspect of the presently disclosed subject matter provides a sensor system adapted to be mounted on a vehicle, comprising:
a housing;
a cover defining a housing space together with the housing, and configured to form an outer surface of the vehicle;
a first sensor configured to sense information of an outside of the vehicle; and
a second sensor configured to sense information of the outside of the vehicle in a different manner from the first sensor without using light,
wherein the first sensor is housed in the housing space; and
wherein the second sensor is supported on an outer surface of the housing.

As used herein, the expression "without using light" means that no ultraviolet, visible, or infrared light is used.

In order to obtain more diverse external information of the vehicle, it is necessary to increase the types of sensors to be mounted on the vehicle, but it is inevitable to increase the size of the housing space for housing the plural types of sensors. However, in the above configuration, the second sensor is supported on the outer surface of the housing defining the housing space. In other words, the second sensor is disposed outside the housing space. Since the second sensor does not use light to obtain external information of the vehicle, the sensing performed by the second sensor will not be obstructed even if it is covered with a portion of the vehicle body, such as a bumper. Accordingly, even if the second sensor is exposed outside of the housing, it may be concealed by a portion of the vehicle body, such as the bumper, when the sensor system is mounted on the vehicle. Therefore, it is possible to suppress enlargement of a part forming a portion of the outer surface of the vehicle body of the vehicle.

Therefore, it is possible to obtain more diverse external information of the vehicle while suppressing the enlargement of the part forming a portion of the outer surface of the vehicle body of the vehicle.

The above sensor system may be configured so as to further comprise a light source configured to emit light for lighting a predetermined area. The light source is housed in the housing space.

From the viewpoint of efficiently acquiring information around the vehicle and from the viewpoint of design, it is demanded to dispose a sensor for obtaining information of the outside of the vehicle at interior spaces of the lamp devices that are disposed at four corners of the vehicle. With such a configuration, the light source can be integrated into the sensor system. That is, it is possible to meet the above-mentioned demand.

The above sensor system may be configured so as to further comprise an adjustment mechanism configured to adjust a sensing reference position of the second sensor.

According to such a configuration, it is possible to individually adjust, with high degree of freedom, the sensing reference position of the second sensor disposed outside of the housing independently of the first sensor housed in the housing space.

The above sensor system may be configured so as to further comprise a controller communicably adapted to be connected to a control device mounted on the vehicle, and configured to control operations of the first sensor and the second sensor.

According to such a configuration, the processing for controlling operations of the first sensor and the second sensor can be at least partially assigned to the controller. As a result, the control load of the controller mounted on the vehicle can be reduced.

In this case, the sensor system may be configured such that the controller is configured to process signals outputted from the first sensor and the second sensor.

According to such a configuration, the processing of the information sensed by the first sensor and the second sensor can be at least partially assigned to the controller. As a result, the control load of the controller mounted on the vehicle can be reduced.

The sensor system may be configured such that:
the first sensor includes at least one of a LiDAR sensor, a camera, a millimeter wave radar, and an ultrasonic sensor; and
the second sensor includes at least one of a millimeter wave radar and an ultrasonic sensor.

### Brief Description of the Drawings

FIG. 1 illustrates a vehicle on which a sensor system according to a first embodiment is mounted.
FIG. 2 illustrates a configuration of the sensor system.
FIG. 3 illustrates an external appearance of the sensor system.
FIG. 4 illustrates a configuration of a sensor system according to a second embodiment.
FIG. 5 illustrates a configuration of a sensor system according to a third embodiment.
FIG. 6 illustrates a configuration of a sensor system according to a fourth embodiment.
FIG. 7 illustrates a configuration of a sensor system according to a fifth embodiment.

### Description of Embodiments

Examples of embodiments will be described below in detail with reference to the accompanying drawings. In each of the drawings used in the following descriptions, the scale is appropriately changed in order to make each of the members have a recognizable size.

In the accompanying drawings, an arrow F represents a forward direction of the illustrated structure. An arrow B represents a rearward direction of the illustrated structure. An arrow L represents a leftward direction of the illustrated structure. An arrow R represents a rightward direction of the illustrated structure. The terms of "left" and "right" used in the following descriptions indicate the left-right directions as viewed from the driver's seat. In the accompanying drawings, the term "up-down direction" corresponds to the direction perpendicular to the drawing sheet.

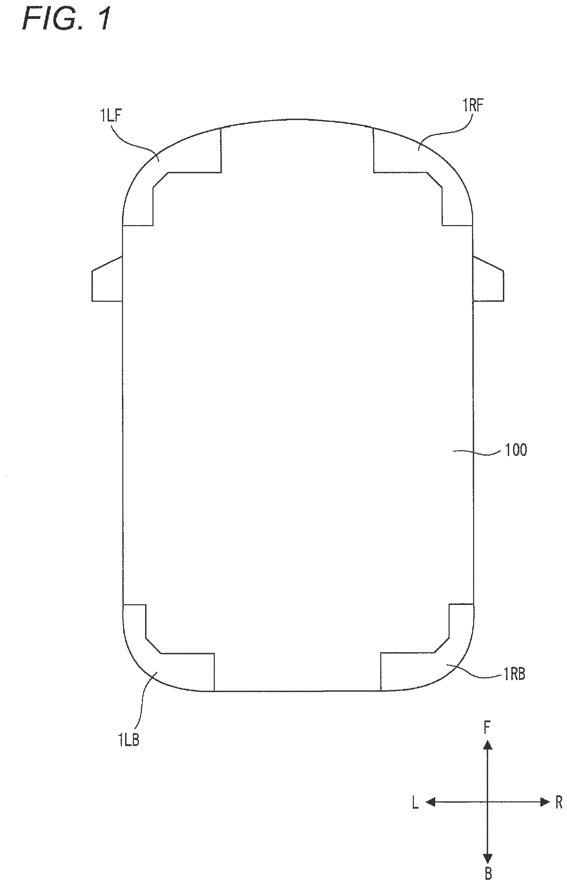

As illustrated in FIG. 1, a left front sensor system 1LF according to a first embodiment is mounted on a left front corner portion of a vehicle 100. A right front sensor system 1RF according to the first embodiment is mounted on a right front corner portion of the vehicle 100.

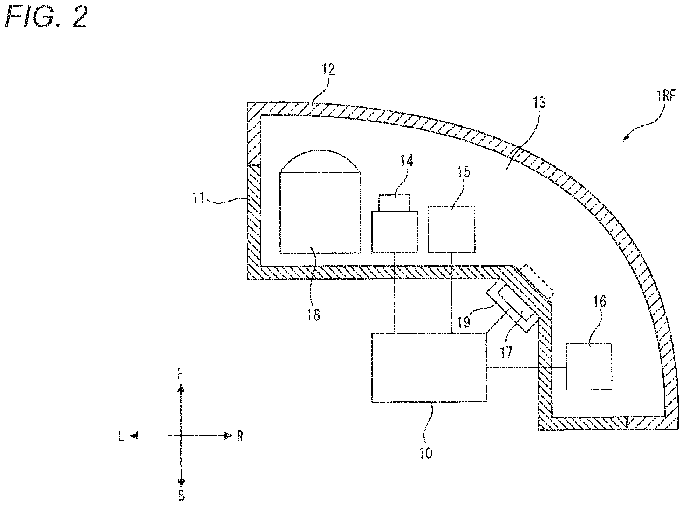

FIG. 2 schematically illustrates a configuration of the right front sensor system 1 RF. Although not illustrated, the left front sensor system 1LF has a configuration symmetrical with the right front sensor system 1RF relative to the left-right direction.

The right front sensor system 1RF is housed in a housing space 13 defined by a housing 11 and a translucent housing 12 (one example of the cover) that is transparent. The translucent cover 12 forms a portion of an outer surface of the vehicle 100.

The right front sensor system 1RF includes a camera 14, a front LiDAR sensor 15, a right LiDAR sensor 16, and a millimeter wave radar 17.

The camera 14 (one example of the first sensor) is housed in the housing space 13. The camera 14 is a device for capturing an image of at least ahead of the vehicle 100 (one example of the outside of the vehicle). The camera 14 may be a visible light camera or an infrared camera. That is, the camera 14 is a sensor that senses information of at least ahead of the vehicle 100. The camera 14 is configured to output a video signal corresponding to the captured image.

The front LiDAR sensor (one example of the first sensor) is housed in the housing space 13. The front LiDAR sensor 15 has a configuration for emitting non-visible light and a configuration for sensing returned light as a result of the non-visible light being reflected by an object that is present at least ahead of the vehicle 100 (one example of the outside of the vehicle). In the present embodiment, infrared light having a wavelength of 905 nm is used as the non-visible light.

The front LiDAR sensor 15 can obtain the distance to the object associated with the returned light, for example, based on the time period from the time when the non-visible light is emitted in a certain direction to the time when the returned light is sensed. Further, by accumulating such distance data in association with the sensing position, it is possible to obtain information as to the shape of the object associated with the returned light. Additionally or alternatively, information as to an attribute such as the material of the object associated with the returned light can be obtained based on the difference in wavelength between the emitted light and the returned light. Additionally or alternatively, information about the color of the object, such as a white line on the road surface, can be obtained, for example, based on the difference in reflectivity of the returned light from the road surface.

That is, the front LiDAR sensor 15 is a sensor that senses information of at least ahead of the vehicle 100. The front LiDAR sensor 15 outputs a signal corresponding to an attribute (intensity, wavelength or the like) of the sensed returned light.

The right LiDAR sensor 16 (one example of the first sensor) is housed in the housing space 13. The right LiDAR sensor 16 has a configuration for emitting non-visible light and a configuration for sensing returned light as a result of the non-visible light being reflected by an object that is present at least on the right of the vehicle 100 (one example of the outside of the vehicle). In the present embodiment, infrared light having a wavelength of 905 nm is used as the non-visible light. Since the right LiDAR sensor 16 has the same configuration as the front LiDAR sensor 15, repetitive detailed descriptions thereof will be omitted.

That is, the right LiDAR sensor 16 is a sensor that senses information of at least on the right of the vehicle 100. The right LiDAR sensor 16 outputs a signal corresponding to an attribute (intensity, wavelength or the like) of the sensed returned light.

The millimeter wave radar 17 (one example of the second sensor) is supported on a bottom surface (one example of the outer surface) at a right front corner portion of the housing 11. The millimeter wave radar 17 has a configuration for transmitting a millimeter wave and a configuration for receiving a reflected wave as a result of the millimeter wave being reflected by an object that is present at least ahead and on the right of the vehicle 100 (one example of the outside of the vehicle). In the present embodiment, the millimeter wave radar 17 uses a millimeter wave having a frequency of 76 GHz. Examples of other frequencies include 24 GHz, 26 GHz, 79 GHz, etc.

The millimeter wave radar 17 can obtain the distance to the object associated with the reflected wave, for example, based on the time period from the time when the millimeter wave is transmitted in a certain direction to the time when the reflected wave is received. Further, by accumulating such distance data in association with the sensing position, it is possible to obtain information as to the shape of the object associated with the reflected wave.

That is, the millimeter wave radar 17 is a sensor that senses information of at least ahead and on the right of the vehicle 100 in a different manner from the camera 14, the front LiDAR sensor 15, and the right LiDAR sensor 16 without using light. The millimeter wave radar 17 outputs a signal corresponding to an attribute (intensity or the like) of the received reflected wave.

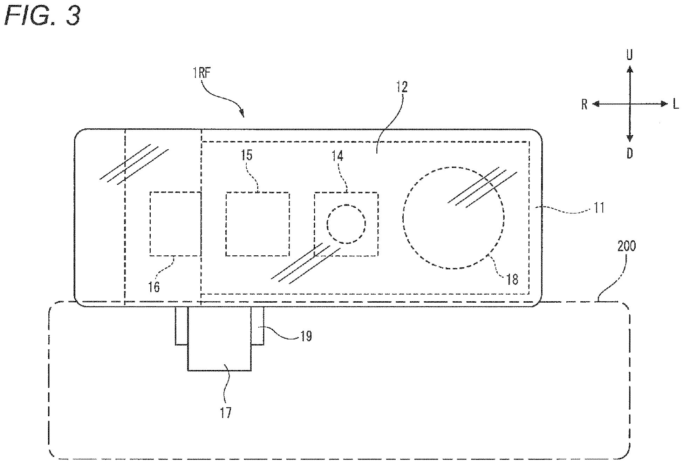

FIG. 3 is a front view illustrating an external appearance of the right front sensor system 1RF. In order to obtain more diverse external information of the vehicle, it is necessary to increase the types of sensors to be mounted on the vehicle, but it is inevitable to increase the size of the housing space for housing the plural types of sensors. However, in the present embodiment, the millimeter wave radar 17, which is one of the plural types of sensors, is supported on the outer surface of the housing 11 that defines the housing space 13. In other words, the millimeter wave radar 17 is disposed outside the housing space 13. Since the millimeter wave radar 17 does not use light to obtain external information of the vehicle 100, the sensing performed by the millimeter wave radar 17 will not be obstructed even if it is covered with a portion of the vehicle body, such as a bumper 200. Accordingly, even if the millimeter wave radar 17 is exposed outside of the housing 11, it may be concealed by a portion of the vehicle body, such as the bumper 200, when the right front sensor system 1RF is mounted on the vehicle 100. Therefore, it is possible to suppress enlargement of a part forming a portion of the outer surface of the vehicle body of the vehicle 100.

Therefore, it is possible to obtain more diverse external information of the vehicle 100 while suppressing the enlargement of the part forming a portion of the outer surface of the vehicle body of the vehicle 100.

As illustrated in FIG. 2 and FIG. 3, the right front sensor system 1RF includes a light source 18. The light source 18 includes an optical system including at least one of a lens and a reflector, and emits light that lights a predetermined area. The light source 18 is disposed in the housing space 13. As the light source 18, a lamp light source or a light emitting element can be used. Examples of a lamp light source include an incandescent lamp, a halogen lamp, a discharge lamp, and a neon lamp. Examples of the light emitting element include a light emitting diode, a laser diode, and an organic EL element.

From the viewpoint of efficiently acquiring information around the vehicle and from the viewpoint of design, it is demanded to dispose a sensor for obtaining information of the outside of the vehicle at interior spaces of the lamp devices that are disposed at four corners of the vehicle. With such a configuration, the light source 18 can be integrated into the right front sensor system 1RF. That is, it is possible to meet the above-mentioned demand.

The right front sensor system 1RF includes an aiming adjustment mechanism 19. The aiming adjustment mechanism 19 is a mechanism for adjusting a sensing reference position of the millimeter wave radar 17. The aiming adjustment mechanism 19 is configured to change at least one of the position and the posture of the millimeter wave radar 17 with respect to the housing 11 in a horizontal plane (in a plane including the front-rear direction and the left-right direction in these drawings) and in a vertical plane (in a plane including the left-right direction and the up-down direction in these drawings). It should be noted that the "horizontal plane" used herein need not coincide with a strict horizontal plane. Likewise, the "vertical plane" used herein need not coincide with a strict vertical plane.

Examples of the aiming adjustment mechanism 19 include a known aiming screw mechanism and a known actuator.

According to such a configuration, it is possible to individually adjust, with high degree of freedom, the sensing reference position of the millimeter wave radar 17 disposed outside of the housing 11 independently of the camera 14, the front LiDAR sensor 15, and the right LiDAR sensor 16 housed in the housing space 13.

The right front sensor system 1RF includes a controller 10. The controller 10 is communicably connected to a control device such as an ECU mounted on the vehicle 100. The controller 10 is configured to receive control signals from such control device and to control the operations of the camera 14, the front LiDAR sensor 15, the right LiDAR sensor 16, and the millimeter wave radar 17. The controller 10 may be supported on the inner side of the housing 11 or may be supported on the outer side of the housing 11.

According to such a configuration, the processing for controlling the operations of the camera 14, the front LiDAR sensor 15, the right LiDAR sensor 16, and the millimeter wave radar 17 can be at least partially assigned to the controller 10. As a result, the control load of the control device mounted on the vehicle 100 can be reduced.

In the present embodiment, the controller 10 is configured to process signals outputted from the camera 14, the front LiDAR sensor 15, the right LiDAR sensor 16, and the millimeter wave radar 17.

As described above, the camera 14 outputs a video signal corresponding to the captured image. Information of at least ahead of the vehicle 100 sensed by the camera 14 is obtained by appropriately processing the video signal by the controller 10.

As described above, the front LiDAR sensor 15 outputs a signal corresponding to the attribute of the sensed returned light (intensity, wavelength or the like). The information of at least ahead of the vehicle 100 sensed by the front LiDAR sensor 15 is obtained by appropriately processing the signal outputted by the controller 10.

As described above, the right LiDAR sensor 16 outputs a signal corresponding to the attribute of the sensed returned light (intensity, wavelength or the like). The information of at least on the right of the vehicle 100 sensed by the right LiDAR sensor 16 is obtained by appropriately processing the signal outputted by the controller 10.

As described above, the millimeter wave radar 17 outputs a signal corresponding to an attribute (intensity or the like) of the received reflected wave. The information of at least ahead and on the right of the vehicle 100 sensed by the millimeter wave radar 17 is obtained by appropriately processing the signal outputted by the controller 10.

The information obtained by the controller 10 is transmitted to the control device mounted on the vehicle 100 as required. Examples of such information include the position and type of an object (a vehicle, a human, an animal, a building, or the like) that is present at least ahead and on the right of the vehicle 100.

According to such a configuration, the processing of the information sensed by the camera 14, the front LiDAR sensor 15, the right LiDAR sensor 16, and the millimeter wave radar 17 can be at least partially assigned to the controller 10. As a result, the control load of the control device mounted on the vehicle 100 can be reduced.

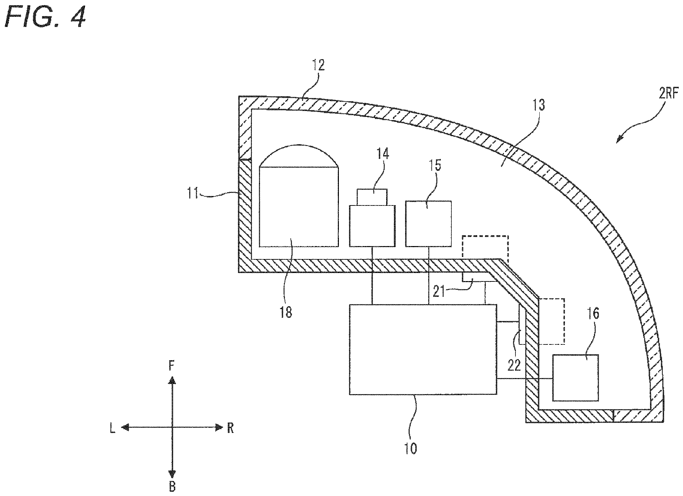

FIG. 4 schematically illustrates a configuration of a right front sensor system 2RF according to a second embodiment. Although not illustrated, a left front sensor system mounted on the left front corner portion of the vehicle 100 has a configuration symmetrical with the right front sensor system 2RF relative to the left-right direction. Components that are the same as or equivalent to those of the right front sensor system 1RF according to the first embodiment are assigned with the same reference numerals, and repetitive descriptions for those will be omitted.

The right front sensor system 2RF includes a front millimeter wave radar 21 and a right millimeter wave radar 22 in place of the millimeter wave radar 17 of the right front sensor system 1RF. Since the front millimeter wave radar 21 and the right millimeter wave radar 22 have the same configurations as the millimeter wave radar 17, repetitive descriptions thereof will be omitted.

The front millimeter wave radar 21 (one example of the second sensor) is supported on the bottom surface (one example of the outer surface) of the housing 11. The front millimeter wave radar 21 has a configuration for transmitting a millimeter wave and a configuration for receiving a reflected wave as a result of the millimeter wave being reflected by an object that is present at least ahead of the vehicle 100 (one example of the outside of the vehicle). That is, the front millimeter wave radar 21 is a sensor that senses information of at least ahead of the vehicle 100 in a different manner from the camera 14, the front LiDAR sensor 15, and the right LiDAR sensor 16 without using light.

The right millimeter wave radar 22 (one example of the second sensor) is supported on the bottom surface (one example of the outer surface) of the housing 11. The right millimeter wave radar 22 has a configuration for transmitting a millimeter wave and a configuration for receiving a reflected wave as a result of the millimeter wave being reflected by an object that is present at least on the right of the vehicle 100 (one example of the outside of the vehicle). That is, the right millimeter wave radar 22 is a sensor that senses information of at least on the right of the vehicle 100 in a different manner from the camera 14, the front LiDAR sensor 15, and the right LiDAR sensor 16 without using light.

At least one of the front millimeter wave radar 21 and the right millimeter wave radar 22 may be provided with the aiming adjustment mechanism 19 described with reference to the right front sensor system 1RF.

The controller 10 is configured to receive a control signal from a control device mounted on the vehicle 100, and to control the operations of the front millimeter wave radar 21 and the right millimeter wave radar 22.

The controller 10 is configured to process signals outputted from the front millimeter wave radar 21 and the right millimeter wave radar 22.

The front millimeter wave radar 21 outputs a signal corresponding to an attribute (intensity or the like) of the received reflected wave. The information of at least ahead of the vehicle 100 sensed by the front millimeter wave radar 21 is obtained by appropriately processing the signal outputted by the controller 10.

The right millimeter wave radar 22 outputs a signal corresponding to an attribute (intensity or the like) of the received reflected wave. The information of at least on the right of the vehicle 100 sensed by the right millimeter wave radar 22 is obtained by appropriately processing the signal outputted by the controller 10.

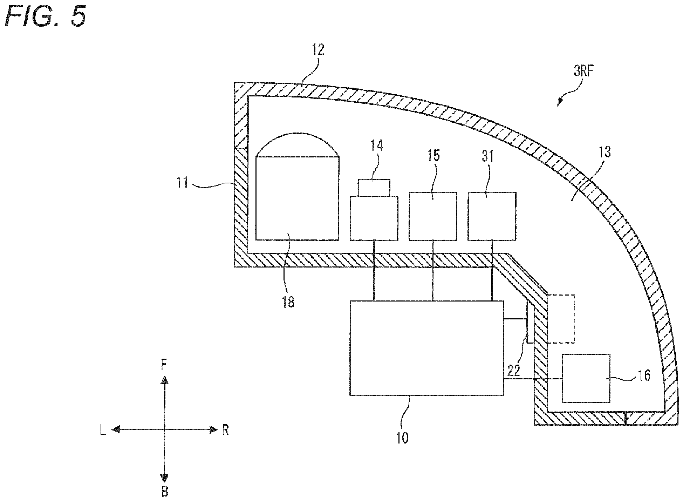

FIG. 5 schematically illustrates a configuration of a right front sensor system 3RF according to a third embodiment. Although not illustrated, a left front sensor system mounted on the left front corner portion of the vehicle 100 has a configuration symmetrical with the right front sensor system 3RF relative to the left-right direction. Components that are the same as or equivalent to those of the right front sensor system 2RF according to the second embodiment are assigned with the same reference numerals, and repetitive descriptions for those will be omitted.

The right front sensor system 3RF includes a front millimeter wave radar 31 instead of the front millimeter wave radar 21 of the right front sensor system 2RF. Since the front millimeter wave radar 31 has the same configuration as the millimeter wave radar 17 of the right front sensor system 1RF, repetitive descriptions thereof will be omitted.

The front millimeter wave radar 31 (one example of the first sensor) is housed in the housing space 13. The front millimeter wave radar 31 has a configuration for transmitting a millimeter wave and a configuration for receiving a reflected wave as a result of the millimeter wave being reflected by an object that is present at least ahead of the vehicle 100 (one example of the outside of the vehicle). That is, the front millimeter wave radar 31 is a sensor that senses information of at least ahead of the vehicle 100.

The controller 10 is configured to receive a control signal from a control device mounted on the vehicle 100, and to control the operations of the front millimeter wave radar 31.

The controller 10 is configured to process a signal outputted from the front millimeter wave radar 31. The front millimeter wave radar 31 outputs a signal corresponding to an attribute (intensity or the like) of the received reflected wave. The information of at least ahead of the vehicle 100 sensed by the front millimeter wave radar 31 is obtained by appropriately processing the signal outputted by the controller 10.

In the present embodiment, a millimeter wave radar (the front millimeter wave radar 31) for sensing information of at least ahead of the vehicle 100 is housed in the housing space 13, and a millimeter wave radar (the right millimeter wave radar 22) for sensing information of at least on the right of the vehicle 100 is supported on the outer surface of the housing 11. However, a millimeter wave radar for sensing information of at least ahead of the vehicle 100 may be supported on the outer surface of the housing 11, and a millimeter wave radar for sensing information of at least on the right of the vehicle 100 may be housed in the housing space 13.

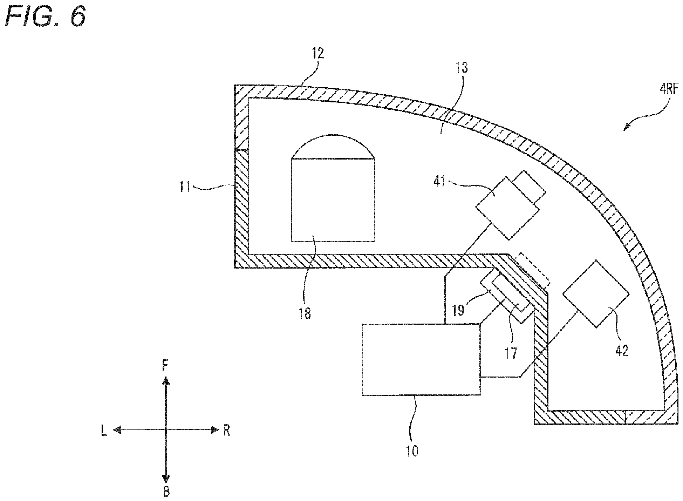

FIG. 6 schematically illustrates a configuration of a right front sensor system 4RF according to a fourth embodiment. Although not illustrated, a left front sensor system mounted on the left front corner portion of the vehicle 100 has a configuration symmetrical with the right front sensor system 4RF relative to the left-right direction. Components that are the same as or equivalent to those of the right front sensor system 1RF according to the first embodiment are assigned with the same reference numerals, and repetitive descriptions for those will be omitted.

The right front sensor system 4RF includes a camera 41 and a LiDAR sensor 42 in place of the camera 14, the front LiDAR sensor 15, and the right LiDAR sensor 16.

The camera 41 (one example of the first sensor) is housed in the housing space 13. The camera 41 is disposed at a right front corner portion in the housing space 13. The camera 41 is a device for capturing an image of at least ahead and on the right of the vehicle 100 (one example of the outside of the vehicle). The camera 41 may be a visible light camera or an infrared camera. That is, the camera 41 is a sensor that senses information of at least ahead and on the right of the vehicle 100.

The LiDAR sensor 42 (one example of the first sensor) is housed in the housing space 13. The LiDAR sensor 42 is disposed at the right front corner portion in the housing space 13. The LiDAR sensor 42 has a configuration for emitting non-visible light and a configuration for sensing returned light as a result of the non-visible light being reflected by an object that is present at least ahead and on the right of the vehicle 100 (one example of the outside of the vehicle). Since the LiDAR sensor 42 has the same configuration as the front LiDAR sensor 15 and the right LiDAR sensor 16 of the right front sensor system 1RF, repetitive descriptions thereof will be omitted. That is, the LiDAR sensor 42 is a sensor that senses information of at least ahead and on the right of the vehicle 100.

The controller 10 is configured to receive a control signal from a control device mounted on the vehicle 100, and to control the operations of the camera 41 and the LiDAR sensor 42.

The controller 10 is configured to process signals outputted from the camera 41 and the LiDAR sensor 42.

The camera 41 outputs a video signal corresponding to the captured image. Information of at least ahead and on the right of the vehicle 100 sensed by the camera 41 is obtained by appropriately processing the video signal by the controller 10.

The LiDAR sensor 42 outputs a signal corresponding to an attribute (intensity or the like) of the received reflected wave. The information of at least ahead of the vehicle 100 sensed by the LiDAR sensor 42 is obtained by appropriately processing the signal outputted by the controller 10.

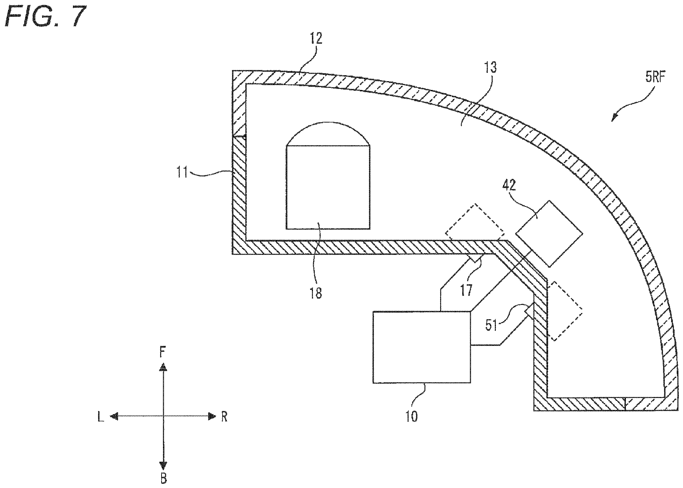

FIG. 7 schematically illustrates a configuration of a right front sensor system 5RF according to a fifth embodiment. Although not illustrated, a left front sensor system mounted on the left front corner portion of the vehicle 100 has a configuration symmetrical with the right front sensor system 5RF relative to the left-right direction. Components that are the same as or equivalent to those of the right front sensor system 4RF according to the fourth embodiment are assigned with the same reference numerals, and repetitive descriptions for those will be omitted.

The right front sensor system 5RF includes an ultrasonic sensor 51 instead of the camera 41 of the right front sensor system 4RF.

The ultrasonic sensor 51 (one example of the second sensor) is supported on a bottom surface (one example of the outer surface) at a right front corner portion of the housing 11. The ultrasonic sensor 51 is configured to transmit ultrasonic waves (several tens of kHz to several GHz) and to receive reflected waves as a result of the ultrasonic waves being reflected by an object that is present at least ahead and on the right of the vehicle 100 (one example of the outside of the vehicle).

The ultrasonic sensor 51 can obtain the distance to the object associated with the reflected wave, for example, based on the time period from the time when the ultrasonic wave is transmitted in a certain direction to the time when the reflected wave is received. Further, by accumulating such distance data in association with the sensing position, it is possible to obtain information as to the shape of the object associated with the reflected wave.

That is, the ultrasonic sensor 52 is a sensor that senses information of at least ahead and on the right of the vehicle 100 in a manner different from that of the LiDAR sensor 42 without using light. The ultrasonic sensor 52 outputs a signal corresponding to an attribute (intensity or the like) of the received reflected wave.

In order to obtain more diverse external information of the vehicle, it is necessary to increase the types of sensors to be mounted on the vehicle, but it is inevitable to increase the size of the housing space for housing the plural types of sensors. However, in the present embodiment, the ultrasonic sensor 51, which is one of the plural types of sensors, is supported on the outer surface of the housing 11 that defines the housing space 13. In other words, the ultrasonic sensor 51 is disposed outside the housing space 13. Since the ultrasonic sensor 51 does not use light to obtain external information of the vehicle 100, the sensing performed by the ultrasonic sensor 51 will not be obstructed even if it is covered with a portion of the vehicle body, such as the bumper 200 (see FIG. 3). Accordingly, even if the ultrasonic sensor 51 is exposed outside of the housing 11, it may be concealed by a portion of the vehicle body, such as the bumper 200, when the right front sensor system 5RF is mounted on the vehicle 100. Therefore, it is possible to suppress enlargement of a part forming a portion of the outer surface of the vehicle body of the vehicle 100.

At least one of the millimeter wave radar 17 and the ultrasonic sensor 51 may be provided with the aiming adjustment mechanism 19 described with reference to the right front sensor system 1RF.

The controller 10 is configured to receive a control signal from a control device mounted on the vehicle 100, and to control the operations of the ultrasonic sensor 52.

The controller 10 is configured to process a signal outputted from the ultrasonic sensor 51. As described above, the ultrasonic sensor 51 outputs a signal corresponding to an attribute (intensity or the like) of the received reflected wave. The information of at least ahead and on the right of the vehicle 100 sensed by the ultrasonic sensor 51 is obtained by appropriately processing the signal outputted by the controller 10.

The above embodiments are merely examples for facilitating understanding of the gist of the presently disclosed subject matter. The configuration according to each of the above embodiments can be appropriately modified or improved without departing from the gist of the presently disclosed subject matter.

In the above embodiments, the camera, the LiDAR sensor, and the millimeter wave radar are exemplified as the sensor housed in the housing space 13 for sensing external information of the vehicle 100. However, at least one of the camera, the LiDAR sensor, the millimeter wave radar, and the ultrasonic sensor may be employed as the sensor housed in the housing space 13 for sensing external data of the vehicle 100. For example, the LiDAR sensor 42 of the right front sensor system 4RF illustrated in FIG. 6 may be replaced with an ultrasonic sensor.

In each of the above embodiments, a sensor for sensing external information of the vehicle 100 in a different manner different from the sensor housed in the housing space 13 without using light is supported on the bottom surface of the housing 11. However, the sensor may be supported at an appropriate location on the outer surface of the housing 11, depending on the specifications of the vehicle 100 on which the sensor is to be mounted.

As used herein, the expression "a sensor for sensing in a different manner from another sensor" comprehends a sensor a type of which is identical with another sensor but a sensing range of which is different from another sensor. Accordingly, a LiDAR sensor for sensing information of at least ahead of the vehicle may be housed in the housing space 13, and a LiDAR sensor for sensing information of at least on the right of the vehicle 100 may be supported on the outer surface of the housing 11.

In each of the above embodiments, the controller 10 controls the operation of each sensor and processes the signal outputted from each sensor. However, a control device such as an ECU mounted on the vehicle 100 may directly control the operation of each sensor. Further, a control device such as an ECU mounted on the vehicle 100 may perform processing of the signal outputted from each sensor.

In each of the above embodiments, the light source 18 is housed in the housing space 13 defined by the housing 11 and the transparent translucent cover 12. However, the housing defining a lamp chamber in which the light source 18 is housed may be different from the housing 11 which houses or supports various sensors in each of the above embodiments. In this case, at least a portion of the translucent cover 12 forming a portion of the outer surface of the vehicle body may be made semi-transparent or opaque, depending on the type of the sensor housed in the housing space 13. For example, when the sensor housed in the housing space 13 does not use visible light to sense the external information of the vehicle 100, the entire cover partitioning the housing space 13 together with the housing 11 may be made semi-transparent or opaque.

According to such a configuration, the sensor arranged in the housing space 13 can be made difficult to be visually recognized from the outside of the housing space 13. Therefore, it is possible to suppress the decrease of merchantability from the viewpoint of design.

In each of the above embodiments, a sensor system to be disposed at the left front corner portion and the right front corner portion of the vehicle 100 is illustrated. However, the configuration described with reference to the right front sensor system according to each of the above embodiments is also applicable to a left rear sensor system 1LB to be disposed in a left rear corner portion of the vehicle 100 illustrated in FIG. 1 and a right rear sensor system 1RB to be disposed in a right rear corner portion of the vehicle 100 illustrated in FIG. 1. For example, the right rear sensor system 1RB may have a configuration that is symmetrical with the right front sensor system 1RF relative to the front-rear direction. The rear left sensor system 1LB may have a configuration symmetrical with the rear right sensor system 1RB relative to the left-right direction.

The present application is based on Japanese Patent Application No. 2016-180577 filed on September 15, 2016, the entire contents of which are incorporated herein by reference.

## Claims

1. A sensor system adapted to be mounted on a vehicle, comprising:
a housing;
a cover defining a housing space together with the housing, and configured to form an outer surface of the vehicle;
a first sensor configured to sense information of an outside of the vehicle; and
a second sensor configured to sense information of the outside of the vehicle in a different manner from the first sensor without using light,
wherein the first sensor is housed in the housing space; and
wherein the second sensor is supported on an outer surface of the housing.

2. The sensor system according to claim 1, further comprising:
a light source configured to emit light for lighting a predetermined area,
wherein the light source is housed in the housing space.

3. The sensor system according to claim 1 or 2, further comprising:
an adjustment mechanism configured to adjust a sensing reference position of the second sensor.

4. The sensor system according to any one of claims 1 to 3, further comprising:
a controller communicably adapted to be connected to a control device mounted on the vehicle, and configured to control operations of the first sensor and the second sensor.

5. The sensor system according to claim 4,
wherein the controller is configured to process signals outputted from the first sensor and the second sensor.

6. The sensor system according to any one of claims 1 to 5,
wherein the first sensor includes at least one of a LiDAR sensor, a camera, a millimeter wave radar, and an ultrasonic sensor; and
wherein the second sensor includes at least one of a millimeter wave radar and an ultrasonic sensor.
